# EUROPÄISCHE PATENTSCHRIFT

(11) **EP 2 227 307 B1**
(45) Veröffentlichungstag und Bekanntmachung des Hinweises auf die Patenterteilung: **01.10.2014**
(21) Anmeldenummer: 08804988.7
(22) Anmeldetag: 02.10.2008
(51) Int. Cl.: B01D 46/24, B01D 46/52, B01D 50/00

(54) **FILTERSYSTEM**
FILTER SYSTEM
SYSTÈME DE FILTRE

(30) Priorität: 02.10.2007 DE 202007013822 U
(43) Veröffentlichungstag der Anmeldung: 15.09.2010
(60) Teilanmeldung: 14181905.2
(73) Patentinhaber: Mann + Hummel GmbH, 71638 Ludwigsburg (DE)
(72) Erfinder: STEINS, Oliver, 67354 Römerberg (DE); GILLENBERG, Eric, 67346 Speyer (DE); RUHLAND, Klaus-Dieter, 67149 Meckenheim (DE); KUPFER, Friedrich, 84163 Poxau (DE)
(86) Internationale Anmeldenummer: PCT/EP2008/063202
(87) Internationale Veröffentlichungsnummer: WO 2009/047196

(56) Entgegenhaltungen:
- DE-U1- 29 522 112
- US-A1- 2006 254 229

## Beschreibung

### Technisches Gebiet

Die Erfindung betrifft ein Filtersystem, insbesondere für die Ansaugluft einer Brennkraftmaschine.

### Stand der Technik

Aus der US 4,720,292 ist ein Luftfilter mit folgenden Merkmalen bekannt: ein Gehäuse mit einer axialen Auslaufsöffnung und einem im Wesentlichen offenen, zweiten Ende, das durch eine entfernbare Abdeckung verschließbar ist. Am Umfang des Gehäuses ist eine Lufteinlassöffnung angeordnet. Im Gehäuse befindet sich ein im Wesentlichen zylindrisches Filterelement mit einem inneren Stützrohr, einem Filter mit einem äußeren Stützrohr, wobei das Filterelement in dem Gehäuse koaxial angeordnet ist. Die Abdichtung des Filterelements an dem Gehäuse erfolgt über eine ringförmige Endscheibe, die eine im Wesentlichen zylindrische, radial einwärts gerichtete Oberfläche aufweist und über einen inneren Abschnitt des Auslassteils geschoben wird.

Bekanntlicherweise werden die Filtereinsätze von Luftfiltern nach einer bestimmten Betriebszeit ausgetauscht. Je nach Staubanfall kann die Standzeit eines Luftfilters wenige Tage (Baumaschinen) bis zu mehreren Monaten betragen.

Der aus der oben genannten US-Schrift bekannte Filtereinsatz sowie andere üblicherweise verwendete Filtereinsätze bestehen aus einer Kombination von Werkstoffen, wobei insbesondere für die Stützrohre Stahlblech oder Kunststoff verwendet wird. Das Filtermedium ist Papier oder ein Kunststoffvlies. Die Endscheiben bestehen aus Kunststoff, beispielsweise aus einem Weichelastomer.

Gerade bei einem häufigen Austausch von Filterelementen ist die zuverlässige und prozesssichere Abdichtung des Filterelements in einem Gehäuse wichtig. Die Abdichtung soll temperaturbeständig und rüttelfest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

Aus der US 2006/0254229 ist ein Luftfilter mit einem Filterelement bekannt. Die Endscheibe des Filterelements weist eine umlaufende Nut auf, die nur die Lage des Filterelements im Gehäuse fixiert.

### Offenbarung der Erfindung

Der Erfindung liegt deshalb die Aufgabe zugrunde, ein Filtersystem mit einer hohen Filtrationseigenschaft und einer zuverlässigen Abdichtung zwischen dem Bereich des unfiltrierten und dem Bereich des filtrierten Mediums zu schaffen. Diese Aufgabe wird durch die Merkmale des Hauptanspruchs gelöst.

Der wesentliche Vorteil der Erfindung liegt darin, dass durch die Ausgestaltung der Dichtungen des Filterelements mit zwei ringwulstförmigen Anordnungen und einer dazwischen liegenden Dichtungsnut gewährleistet ist, dass einerseits eine hohe Abdichtwirkung und andererseits eine gute Abstützung des Filterelements in einem Gehäuse erzielt wird. Gerade bei der Verwendung von Kunststoff für die Abdichtung an schwingungsbelasteten Elementen ist eine Gestaltung erforderlich, die auch bei extremen Temperaturschwankungen zuverlässig arbeitet.

Gemäß einer Ausgestaltung der Erfindung besteht die Endscheibe, welche die Dichtung trägt, aus einem Polyurethan. Selbstverständlich besteht auch die Möglichkeit, die Endscheibe aus einem Weichelastomer herzustellen oder aus mehreren Komponenten, zum Beispiel im Montagespritzgießverfahren, wobei die Komponente, die die Dichtung bildet, aus einem Elastomer besteht und die Komponente, die die Verbindung zu dem Filtermedium herstellt, ein thermoplastischer Kunststoff ist. Dieser kann mit dem Filtermedium verschweißt oder verklebt sein.

In einer weiteren Ausgestaltung der Erfindung ist vorgesehen, die Verstärkungsplatte, welche sich in der Endscheibe befindet, mit Durchbrüchen zu versehen. Diese Durchbrüche ermöglichen das Durchdringen von Polyurethan bei der Herstellung des Filterelements und schaffen damit eine innige, formschlüssige Verbindung zwischen Filtermedium und Dichtungskontur und Verstärkungsplatte.

Weiterbildungsgemäß ist die Verstärkungsplatte in dem Bereich, der sich über den Polyurethanschaum hinaus erstreckt, mit einer Ringfläche oder einem zylindrischen Ringmantel versehen. Dieser erstreckt sich über die Falten des Filtermediums, beispielsweise über einen Bereich von 0 bis 30% der Gesamtlänge des Filterelements, und schützt damit die Falten bei einer unsachgemäßen Handhabung oder zum Beispiel beim Ausklopfen oder manuellen Reinigung des Filterelements.

Die zweite und der Dichtendscheibe gegenüberliegenden Endscheibe kann ebenfalls gemäß einer Ausgestaltung der Erfindung aus einem Polyurethanschaum bestehen und weist ein Verschlussstück aus einem thermoplastischen Kunststoff auf, das den Innenraum des Filterelements abdichtet.

Die Endscheiben können auch im thixotropen Auftragsverfahren hergestellt werden. Dies bedeutet ein aufdosieren des thixotropen Materials bei dem gleichzeitig die Dichtungsstruktur ohne zusätzliche Formschalen gebildet wird.

Die Erfindung betrifft ein Filtersystem mit einem Filterelement. Dieses Filtersystem dient insbesondere der Filtrierung der Ansaugluft einer Brennkraftmaschine und besteht aus einem Gehäuse und einem Deckel zur Aufnahme des Filterelements. Das Filtersystem ist mit zwei Ringnuten ausgestattet, die im Bereich der Abdichtung mit den Dichtkonturen des Filterelements kommunizieren.

Weiterbildungsgemäß ist an dem Gehäuse im Bereich des Einlasses ein Zyklon oder ein Drehströmungsabscheider angeordnet. Dieser besteht aus Leitgeometrie, die das zu filternde Medium in eine Drehung versetzen. Durch diese Drehung wird der Schmutz im Bereich der Gehäusewand aufkonzentriert und an einer geeigneten Stelle über einen Schmutzauslass ausgetragen.

Gemäß einer weiteren Ausgestaltung der Erfindung ist ein Sekundärelement vorgesehen, welches im Inneren des Filtersystems positioniert ist. Das Sekundärelement hat die Aufgabe, bei einem Austausch des Filterelements den Auslass des Filtersystems weiterhin verschlossen zu halten, so dass kein Schmutz in diesen Bereich eindringen kann, während das Filterelement gereinigt oder erneuert wird. Das Sekundärelement ist in bevorzugter Ausgestaltung über eine Schraubverbindung mit dem Gehäuse verbunden und zum Gehäuse mit einer Dichtung versehen.

Diese und weitere Merkmale gehen nicht nur aus den Ansprüchen, sondern auch aus der Figurenbeschreibung und den Figuren hervor.

### Kurze Beschreibung der Zeichnungen

Die Erfindung wird nachfolgend anhand eines Ausführungsbeispiels näher erläutert. Es zeigt:
Figur 1 einen Schnitt durch ein Filtersystem und
Figur 2 die Detaildarstellung im Dichtungsbereich des Filtergehäuses.

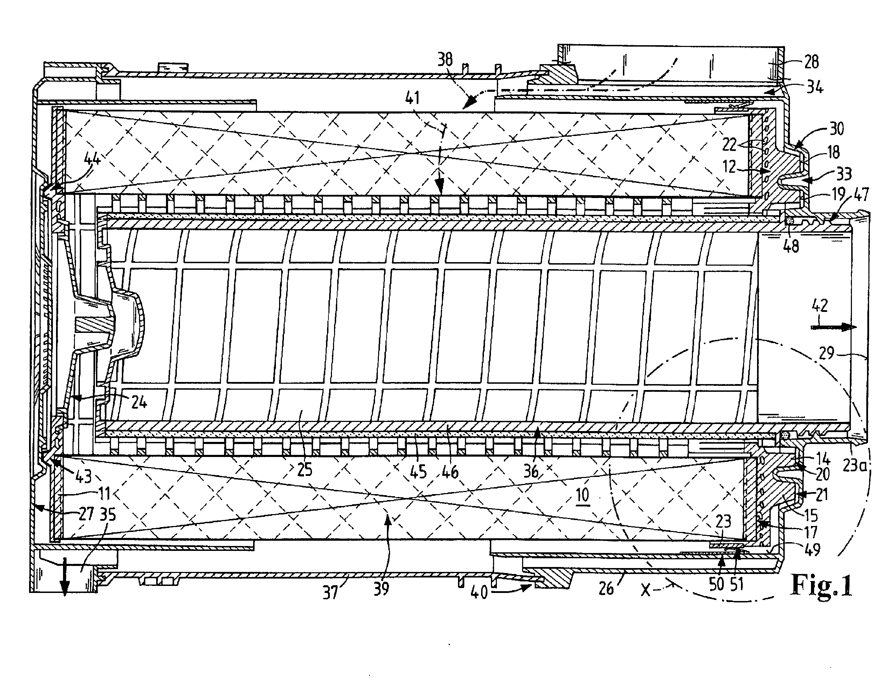

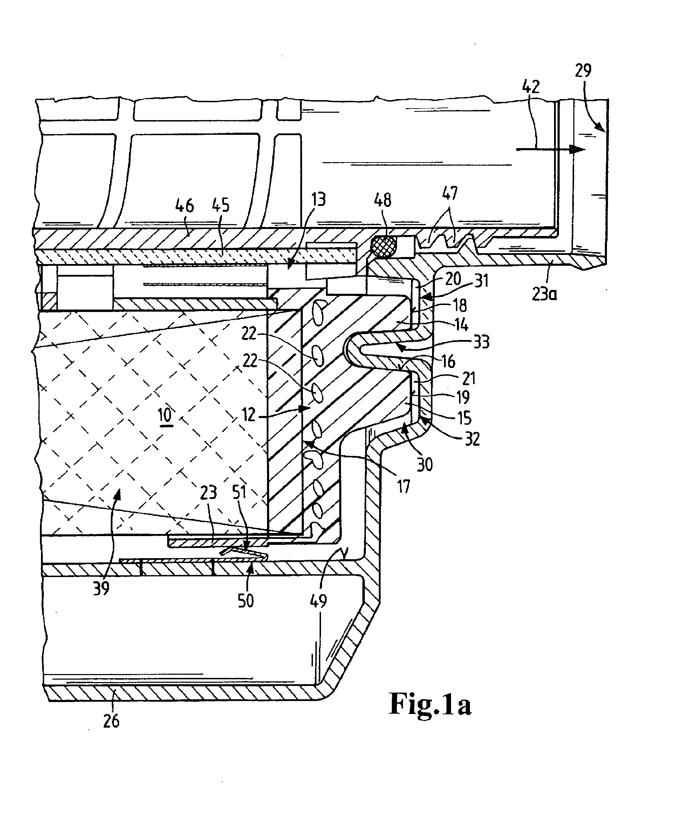

Das Filtersystem gemäß Figur 1 besteht aus einem Gehäuse 26, welches im Wesentlichen konzentrisch aufgebaut ist und einen Einlass 28 aufweist. Das Filtersystem dient zur Filtrierung der Ansaugluft einer Brennkraftmaschine. Über den Einlass 28 wird die zu reinigende Luft gemäß dem Pfeil 38 zugeführt, strömt durch einen Zyklonvorabscheider 34 und wird dort in eine Drehströmung versetzt. Aufgrund dieser Drehströmung gelangen Partikel, die sich in der Luft befinden, an die Gehäuseaußenwand und werden von dort über einen Schmutzauslass 35, der über ein geeignetes Ventil verschlossen werden kann, nach außen getragen.

### Ausführungsform(en) der Erfindung

Am Gehäuse 26 ist ein Mittelstück 37 angeordnet. Dieses ist ebenfalls konzentrisch gestaltet und mit dem Gehäuse im Bereich 40, beispielsweise über eine Schweißverbindung, gekoppelt. Am Mittelstück 37 befindet sich ein Deckel 27. Dieser ist mit dem Mittelstück über Spannverschlüsse oder ein anderes geeignetes Verschlusssystem lösbar verbunden. Deckel, Mittelstück und Gehäuse stellen somit ein geschlossenes System dar, welches einen Auslass 29 zum Ableiten der gereinigten Luft aufweist.

Innerhalb des Gesamtsystems befindet sich ein Filterelement 39. Dieses besteht aus einem zickzackförmig gefalteten Filtermedium 10 und ist in konzentrischer Form aufgebaut. An den Stirnseiten besitzt das Filterelement 39 Endscheiben 11, 12. Während eine Endscheibe 12 eine konzentrische Öffnung 13 aufweist, ist die weitere Endscheibe 11 mit einem Verschlussstück 24 verschlossen. Es besteht auch die Möglichkeit die weitere Endscheibe mit einer konzentrischen Öffnung zu versehen, die durch einen Stutzen am Deckel 27 verschlossen wird. Die zu reinigende Luft strömt gemäß dem Pfeil 41 durch das Filterelement hindurch und gemäß Pfeil 42 gereinigt über den Auslass 29 zu einer hier nicht dargestellten Brennkraftmaschine. Das Filterelement besitzt an der rechtsseitig angeordneten Endscheibe 12 einen ersten Ringwulst 14 und einen zweiten Ringwulst 15. Dazwischen befindet sich eine Dichtungsnut 16.

Innerhalb der Endscheibe 12 ist eine Verstärkungsplatte 17 vorgesehen. Diese weist Durchbrüche 22 auf. Die Verstärkungsplatte ist im äußeren Bereich, das heißt außerhalb des Dichtungsmassenbereichs, mit einer Ringfläche 23 versehen. Diese dient zur Abschirmung des Filtermediums oder des Elements beim Montieren oder Ausklopfen oder sonstigem manuellen Handhaben.

Sowohl Ringwulst 14 als auch Ringwulst 15 stoßen an Rippen 20, 21 an und definieren damit die axiale Lage des Filterelements im Gehäuse.

In einer alternativen Ausgestaltung, die nicht auf dieses Beispiel beschränkt ist, kann die Lage des Filterelementes durch das Eingreifen der Ringwülste 14 und 15 in Rungnuten 31 und 32 definiert werden - ohne ein Anstoßen an die Rippen 20, 21. Alternativ können auch andere Punkte zur zusätzlichen axialen und/oder radialen Fixierung verwendet werden.

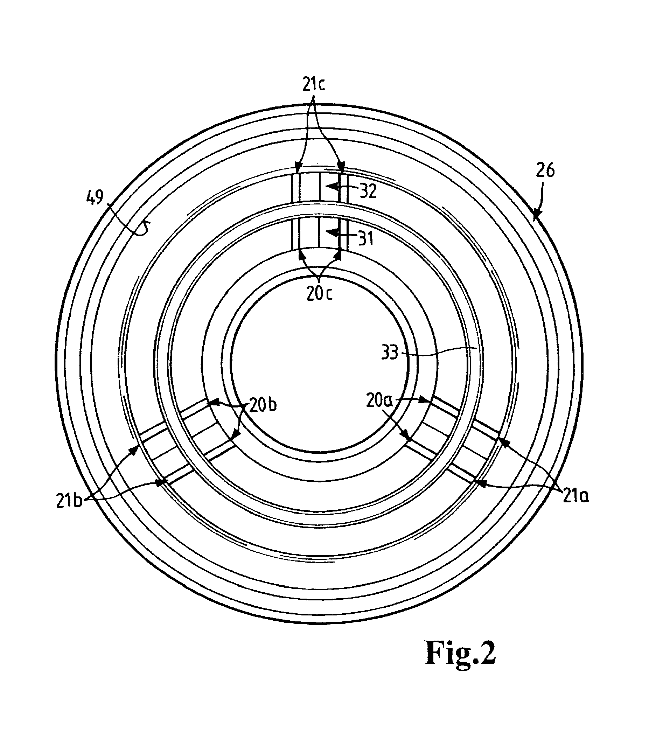

Die Rippen sind in Figur 2 näher dargestellt, es handelt sich um so genannte Doppelrippen, das heißt zwei benachbart liegende Rippen 20a, 20b ,20c, die im Nutgrund der Ringnut 31 und im Nutgrund der Ringnut 32 angeordnet sind und beispielsweise eine Höhe von 3 bis 6 mm aufweisen.

Der Dichtungssteg 33, der sich zwischen den beiden Ringnuten befindet weist an seinen Flanken den Dichtungsbereich auf, hier dichtet die Endscheibe 12 mit ihrer Dichtungsnut 16 ab. Es besteht somit ein Doppeldichtungsprinzip über diese beiden Flanken. Die Dichtungsnut 16 ist geringfügig tiefer als der Dichtungssteg 33, so dass eine gewisse axiale Toleranz in diesem Bereich möglich ist. Wie bereits erwähnt, besteht die Endscheibe aus einem Polyurethanschaum oder einem anderen Elastomer, dessen Härte derart bemessen ist, dass sie einerseits die erforderlichen Dichtkräfte aufbringt, andererseits aber auch für eine gute Positionierung des Filterelements im Filtergehäuse sorgt. Durch die Zweiflankendichtung und die Abstützung der Ringwülste 14, 15 auf den Rippen 20 ist eine relativ geringe Montagekraft und auch eine geringe Lösekraft zum Austausch eines Filterelements erforderlich.

In einer alternativen Ausführungsform die nicht auf dieses Beispiel beschränkt ist, hat der Dichtungssteg 33 an seinem axialen Ende einen zusätzlichen Dichtwulst, z. B. eine ringförmig, auf dem Dichtungssteg 33 verlaufende, axial ins Gehäuseinnere gerichtete Struktur. Hierdurch kann eine zusätzliche axiale Abdichtung erreicht werden - ohne großen Einfluss auf die Anpresskraft beim Einbau des Filterelementes ins Filtergehäuse. Dies kann z. B. durch einen gegenüber dem Dichtungssteg 33 dünnen Dichtwulst geschehen.

Die Endscheibe 11 ist mit Stütznasen 43, 44 versehen. Diese stützen sich an dem Deckel 27 ab und sorgen damit für eine ausreichend axiale Kraft in Richtung Endscheibe 12 und damit für eine zuverlässige Abdichtung. In der Endscheibe 12 ist ein Verschlussstück 24 eingebettet. Dieses trennt den Rohluftraum von dem Reinluftraum. Innerhalb des Filterelements befindet sich ein Sekundärelement 36, das den Innenraum 25 umgibt. Die gereinigte Luft strömt durch das Sekundärelement hindurch, welches üblicherweise eine Vliesauflage 45 besitzt. Die Vliesauflage ist auf einem thermoplastischen oder metallischen Grundkörper 46 befestigt. Das Sekundärelement 36 ist über ein Schraubgewinde 47 an dem Auslassstutzen des Auslasses 29 befestigt und gleichzeitig über einen O-Ring 48 in diesem Bereich abgedichtet.

Das Gehäuse 26 ist mit einer Innenwand 49 versehen. Diese Innenwand weist einen geringen Abstand zu der Ringfläche 23 auf. An dieser Innenwand ist ein Spannelement 50 gemäß Figur 3 vorgesehen.

Dieses Spannelement besteht aus einem Federstahl, der an mehreren Stellen ausgeformt ist und in den Einbauraum des Filterelements vorsteht. Die ausgeformten Stellen sind in Figur 1 zu erkennen und mit der Bezugsziffer 51 versehen. Beim Einbauen des Filterelements werden die ausgeformten Stellen nach außen gedrückt und dienen zur Zentrierung des Filterelements. Sofern ein Filterelement ohne die Ringfläche 23 in das Gehäuse eingesetzt wird, besteht keine Möglichkeit der Zentrierung des Filterelements. In diesem Fall würden unter Umständen das Filterelement bzw. das Filtermedium beschädigt. Damit dient das Spannelement als Schutz gegen den unbeabsichtigten Einbau eines falschen oder fehlerhaften Filterelements.

## Patentansprüche

1. Filtersystem, umfassend
- ein Gehäuse (26), welches im Wesentlichen konzentrisch aufgebaut ist,
- einen das Gehäuse (26) verschließenden Deckel (27), der ebenfalls konzentrisch aufgebaut ist,
- einen am Gehäuse und/oder Deckel angeordneten Einlass (28) zum Zuführen des zu filternden Mediums, insbesondere Luft,
- wobei am Gehäuse (26) konzentrisch ein Auslass (29) zur Ableitung des gefilterten Mediums vorgesehen ist,
wobei am Gehäuse im Bereich des Auslasses (29) eine Dichtungskontur vorgesehen ist, die aus zwei konzentrisch verlaufenden Ringnuten (31, 32) und einem zwischen den beiden Ringnuten angeordneten Dichtungssteg (33) besteht, wobei die Ringnuten am Nutgrund radial verlaufende Rippen (20, 21) aufweisen,
- ein Filterelement, umfassend ein zickzackförmig gefaltetes Filtermedium (10) in konzentrischer Form, eine erste an einer Stirnseite angeordnete offene oder geschlossene Endscheibe (11) und eine zweite an der gegenüberliegenden Stirnseite angeordnete Endscheibe (12), wobei die zweite Endscheibe (12) eine konzentrische Öffnung (13) aufweist und sich im Wesentlichen kreisringförmig über die Falten des Filtermediums erstreckt, wobei die zweite Endscheibe (12) einen ersten (14) und einen zweiten (15) sich axial nach außen erstreckenden Ringwulst (14, 15) sowie eine dazwischen liegende Dichtungsnut (16) aufweist, wobei der erste Ringwulst (14) und der zweite Ringwulst (15) jeweils eine äußere Stirnfläche (18, 19) aufweist, wobei die Dichtungskontur am Gehäuse im Bereich des Auslasses mit dem ersten und zweiten Ringwulst (14, 15) und der Dichtungsnut (16) korrespondiert, und wobei sich die äußeren Stirnflächen (18, 19) des ersten und zweiten Ringwulstes (14, 15) an den radial verlaufenden Rippen (20, 21) des Gehäuses abstützen.

2. Filtersystem nach Anspruch 1, **dadurch gekennzeichnet, dass** die Endscheibe im Bereich zwischen dem Filtermedium und den Ringwülsten eine Verstärkungsplatte (17) oder einen Verstärkungsring aufweist.

3. Filtersystem nach Anspruch 1, **dadurch gekennzeichnet, dass** die Endscheibe (12) aus einem Polyurethanschaum oder einem Elastomer besteht.

4. Filtersystem nach Anspruch 2 und 3, **dadurch gekennzeichnet, dass** in der Endscheibe eine Verstärkungsplatte (17) eingebettet ist, wobei die Verstärkungsplatte Durchbrüche (22) aufweist, die ein Durchströmen des Polyurethanschaums bei der Montage ermöglichen.

5. Filtersystem nach Anspruch 4, **dadurch gekennzeichnet, dass** die Verstärkungsplatte eine sich nach außen in axialer Richtung über das Filterelement erstreckende Ringfläche (23) aufweist.

6. Filtersystem nach Anspruch 1, **dadurch gekennzeichnet, dass** die Endscheibe (11) aus Polyurethanschaum besteht und ein konzentrisch an- geordnetes Verschlussstück (24) aufweist, welches den Innenraum (25) des Filterelements (10) im Bereich dieser Endscheibe abdichtet.

7. Filtersystem nach einem der vorhergehenden Ansprüche, **dadurch gekennzeichnet, dass** der Dichtungssteg (33) eine Höhe aufweist, die geringer ist als die Dichtungsnut (16) des Filterelements.

8. Filtersystem nach einem der vorhergehenden Ansprüche, **dadurch gekennzeichnet, dass** im Bereich des Einlasses (28) ein Zyklonabschneider (34) vorgesehen ist und am Gehäuse (26) oder am Deckel (27) ein Schmutzauslass (35) vorgesehen ist.

9. Filtersystem nach einem der vorhergehenden Ansprüche, **dadurch gekennzeichnet, dass** ein Sekundärelement (36) vorgesehen ist, welches im Inneren des Filterelements (10) positioniert werden kann.

10. Filtersystem nach Anspruch 9, **dadurch gekennzeichnet, dass** das Sekundärelement (36) über eine Schraubverbindung mit dem Gehäuse (26) verbunden ist.

## Claims

1. Filter system, comprising
- a housing (26) which is substantially designed concentrically,
- a cover (27) closing the housing (26) and also designed concentrically,
- an inlet (28) disposed on the housing and/or the cover for supplying the medium to be filtered, in particular air,
- an outlet (29) for discharging the filtered medium being provided concentrically on the housing (26),
a sealing contour being provided on the housing in the area of the outlet (29) consisting of two concentrically extending ring grooves (31, 32) and a sealing web (33) disposed between the two ring grooves, the ring grooves featuring radially extending ribs (20, 21) at the groove base,
- a filter element, comprising a zigzag-folded filter medium (10) in concentric shape, a first open or closed end disk (11) disposed on a front face and a second end disk (12) disposed on the opposing front face, the second end disk (12) featuring a concentric opening (13) and extending substantially in a circular ring-shaped manner across the folds of the filter medium, the second end disk (12) featuring a first (14) and a second (15) ring bead (14, 15) extending axially outwards as well as a sealing groove (16) placed therebetween, the first ring bead (14) and the second ring bead (15) featuring each an outer end face (18, 19), the sealing contour on the housing corresponding in the area of the outlet with the first and second ring bead (14, 15) and the sealing groove (16), and the outer end faces (18, 19) of the first and the second ring bead (14, 15) being supported by the radially extending ribs (20, 21) of the housing.

2. Filter system according to claim 1, **characterized in that** the end disk features a reinforcement plate (17) or a reinforcement ring in the area between the filter medium and the ring beads.

3. Filter system according to claim 1, **characterized in that** the end disk (12) is made of polyurethane foam or an elastomer.

4. Filter system according to claim 2 and 3, **characterized in that** a reinforcement plate (17) is embedded in the end disk, the reinforcement plate featuring breakthroughs (22) which enable the polyurethane foam to flow through during the assembly.

5. Filter system according to claim 4, **characterized in that** the reinforcement plate features an annular surface (23) extending outwards in axial direction across the filter element.

6. Filter system according to claim 1, **characterized in that** the end disk (11) is made of polyurethane foam and features a concentrically disposed plug (24) which seals the interior space (25) of the filter element (10) in the area of this end disk.

7. Filter system according to one of the above claims, **characterized in that** the sealing web (33) features a height which is smaller than the sealing groove (16) of the filter element.

8. Filter system according to one of the above claims, **characterized in that** in the area of the inlet (28) a cyclone separator (34) is provided and that a dirt outlet (35) is provided on the housing (26) or on the cover (27).

9. Filter system according to one of the above claims, **characterized in that** a secondary element (36) is provided which can be positioned inside of the filter element (10)

10. Filter system according to claim 9, **characterized in that** the secondary element (36) is connected with the housing (26) via a screwed connection.

## Revendications

1. Système de filtre, comprenant
- un boîtier (26) essentiellement conçu de manière concentrique,
- un couvercle (27) obturant le boîtier (26) et également conçu de manière concentrique,
- une entrée (28) placée sur le boîtier et/ou sur le couvercle pour faire entrer le milieu à filtrer, notamment l'air,
- une sortie (29) concentrique étant prévue sur le boîtier (26) pour évacuer le milieu filtré,
un contour d'étanchéité constitué de deux rainures annulaires (31, 32) évoluant de manière concentrique et d'une nervure d'étanchéité (33) placée entre les deux rainures annulaires étant prévu sur le boîtier, à proximité de la sortie (29), les rainures annulaires étant pourvues à leur base de nervures (20, 21) évoluant de manière radiale,
- un élément filtrant, comprenant un milieu filtrant (10) concentrique plié en accordéon, un premier disque d'extrémité (11) ouvert ou fermé disposé sur une face frontale et un deuxième disque d'extrémité (12) placé sur la face frontale opposée, le deuxième disque d'extrémité (12) comportant une ouverture concentrique (13) et s'étendant essentiellement en forme d'anneau de cercle au-dessus des plis du milieu filtrant, le deuxième disque d'extrémité (12) présentant un premier (14) et un deuxième (15) bourrelets annulaires (14, 15) évoluant en sens axial vers l'extérieur et une rainure d'étanchéité (16) intermédiaire, le premier bourrelet annulaire (14) et le deuxième bourrelet annulaire (15) présentant chacun une face frontale (18, 19) extérieure, le contour d'étanchéité du boîtier correspondant, dans la zone de la sortie, avec le premier et le deuxième bourrelets annulaires (14, 15) et avec la rainure d'étanchéité (16), et les faces frontales (18, 19) extérieures du premier et du deuxième bourrelets annulaires (14, 15) s'appuyant sur les nervures (20, 21) radiales du boîtier.

2. Système de filtre selon la revendication 1, **caractérisé en ce que** le disque d'extrémité présente une plaque de renfort (17) ou une bague de renfort dans la zone située entre le milieu filtrant et les bourrelets annulaires.

3. Système de filtre selon la revendication 1, **caractérisé en ce que** le disque d'extrémité (12) est composé d'une mousse polyuréthane ou d'un élastomère.

4. Système de filtre selon les revendications 2 et 3, **caractérisé en ce qu'**une plaque de renfort (17) est incorporée au disque d'extrémité, la plaque de renfort présentant des traversées (22) autorisant le passage de la mousse polyuréthane lors du montage.

5. Système de filtre selon la revendication 4, **caractérisé en ce que la** plaque de renfort comporte une surface annulaire (23) s'étendant en sens axial vers l'extérieur au-dessus de l'élément filtrant.

6. Système de filtre selon la revendication 1, **caractérisé en ce que** le disque d'extrémité (11) est réalisé en mousse polyuréthane et présente un obturateur (24) concentrique qui étanche l'espace intérieur (25) de l'élément filtrant (10) à proximité de ce disque d'extrémité.

7. Système de filtre selon l'une des revendications précédentes, **caractérisé en ce que** la nervure d'étanchéité (33) a une hauteur inférieure à celle de la rainure d'étanchéité (16) de l'élément filtrant.

8. Système de filtre selon l'une des revendications précédentes, **caractérisé en ce qu**'un séparateur à cyclone (34) est prévu dans la zone de l'entrée (28) et qu'un orifice d'évacuation des saletés (35) est prévu sur le boîtier (26) ou sur le couvercle (27).

9. Système de filtre selon l'une des revendications précédentes, **caractérisé en ce qu'**un élément secondaire (36) qui peut être positionné à l'intérieur de l'élément filtrant (10) est prévu.

10. Système de filtre selon la revendication 9, **caractérisé en ce que** l'élément secondaire (36) est relié au boîtier (26) par un raccord vissé.
